# EUROPÄISCHE PATENTSCHRIFT

(11) **EP 3 311 125 B1**
(45) Veröffentlichungstag und Bekanntmachung des Hinweises auf die Patenterteilung: **27.03.2024**
(21) Anmeldenummer: 16724890.5
(22) Anmeldetag: 24.05.2016
(51) Int. Cl.: G01F 1/84, G01N 9/00, G01F 15/02

(54) **CORIOLIS-MASSE-DURCHFLUSSMESSGERÄT ODER -DICHTEMESSGERÄT**
CORIOLIS TYPE MASS FLOWMETER OR DENSIMETER
DÉBITMÈTRE OR DENSIMÈTRE DU TYPE CORIOLIS

(30) Priorität: 18.06.2015 DE 102015109790
(43) Veröffentlichungstag der Anmeldung: 25.04.2018
(73) Patentinhaber: Endress+Hauser Flowtec AG, 4153 Reinach (CH)
(72) Erfinder: ZHU, Hao, 85354 Freising (DE); RIEDER, Alfred, 84032 Landshut (DE); ECKERT, Gerhard, 79639 Grenzach-Wyhlen (DE); BITTO, Ennio, 4147 Aesch (CH)
(74) Vertreter: Hahn, Christian
(86) Internationale Anmeldenummer: PCT/EP2016/061643
(87) Internationale Veröffentlichungsnummer: WO 2016/202537

(56) Entgegenhaltungen:
- DE-A1-102010 018 222
- JP-A- 2009 180 699
- US-A- 5 370 002
- US-A- 5 734 112
- US-A1- 2005 072 238
- US-A1- 2011 023 626
- US-A1- 2012 192 658
- US-A1- 2015 082 916

## Beschreibung

Die vorliegende Erfindung betrifft ein Coriolis-Massedurchflussmessgerät bzw. Dichtemessgerät.

Ein gattungsgemäßes Coriolis-Massedurchflussmessgerät bzw. Dichtemessgerät ist beispielsweise in der Veröffentlichung EP 1 296 119 A1 offenbart. Es umfasst: mindestens zwei in der Ruhelage gebogen verlaufende Messrohre, wobei die Messrohre Messrohrmittenlinien aufweisen, welche paarweise spiegelsymmetrisch zu einer ersten Spiegelebene verlaufen, die sich zwischen den Messrohren erstreckt, wobei die Messrohrmittenlinien spiegelsymmetrisch jeweils zu einer zweiten Spiegelebene verlaufen die sich senkrecht zur ersten Spiegelebene erstreckt; mindestens eine Erregeranordnung und mindestens eine Sensoranordnung; einlaufseitig und auslaufseitig jeweils einen Sammler, wobei die Messrohre jeweils einlaufseitig und auslaufseitig mit einem Sammler strömungstechnisch zusammengefasst sind; einen Trägerkörper, welcher den einlaufseitigen Sammler und den auslaufseitigen Sammler starr mit einander verbindet; und einlaufseitig und auslaufseitig jeweils zwei plattenförmige Koppler, wobei die Messrohre mittels der Koppler paarweise miteinander verbunden sind, um einen Oszillator zu bilden, wobei die Erregeranordnung dazu eingerichtet ist, einen Biegeschwingungsnutzmode zwischen den beiden Messrohren des Oszillators anzuregen, die Sensoranordnung dazu eingerichtet ist, Schwingungen des Oszillators zu erfassen, wobei die Messrohrmittenlinien der Messrohre mindestens eines Oszillators zwischen der zweiten Spiegelebene und den Sammlern jeweils einen ersten gebogenen Abschnitt, einen zweiten gebogenen Abschnitt und einen zwischen den gebogenen Abschnitten angeordneten, geraden Abschnitt aufweisen, an den die beiden gebogenen Abschnitte anschließen, wobei der erste gebogene Abschnitt und der zweite gebogene Abschnitt in entgegengesetzte Richtungen gebogen sind, wobei der zweite gebogene Abschnitt jeweils auf der der zweiten Spiegelebene abgewandten Seite des geraden Abschnitts angeordnet ist, wobei der erste gebogene Abschnitt zwischen der zweiten Spiegelebene und dem geraden Abschnitt einen Versteifungskörper aufweist, welche das Messrohr ringförmig umgreift.

Die Veröffentlichung US 2015/0082916 A1 offenbart ein Coriolis-Massedurchflussmessgerät bzw. Dichtemessgerät dessen endseitige Sammlerstücke konstante Strömungsquerschnitte aufweisen, um den Druckverlust über dem Gerät zu minimieren. Die Veröffentlichung US 2012/0192658 A1 offenbart ein Coriolis-Massedurchflussmessgerät mit vier paarweise parallel geführten Messrohren, wobei die beiden Messrohrpaare so gestaltet sind, dass sie bei unterschiedlicher Form den gleichen Strömungswiderstand aufweisen.

Die Veröffentlichung DE 10 2010 018 222 A1 offenbart ein Coriolis-Massedurchflussmessgerät mit einem paar gebogenen Messrohren in einem Gehäuse, wobei das Gehäuse zur Frequenztrennung versteift ist. Coriolis-Massedurchflussmessgeräte bzw. Dichtemessgeräte sind weiterhin in WO-A 01/ 33 174, WO-A 00/ 57 141, WO-A 98/ 07 009, US-A 57 96 001, US-A 47 81 069, EP-A 1 001 254, EP-A 553 939, US 2011/023626 A1, JP 2009 080699 A und US 5 370 002 A beschrieben.

Gebogene Messrohre werden im sogenannten Nutzmode üblicherweise zu Biegeschwingungen angeregt. Bedingt durch die Biegeschwingungen werden im hindurchströmenden Medium Corioliskräfte induziert, die dazu führen, dass den angeregten Bieschwingungen des Nutzmodes Schwingungen im Coriolismode gleichfrequent überlagert werden. Bei gebogenen Messrohren werden durch thermisch bedingte Ausdehnungen praktisch keine oder nur sehr geringfügige mechanische Spannungen im Messrohr selbst bzw. in einer angeschlossenen Rohrleitung hervorgerufen. Ferner können die Messrohre weit ausladend ausgeführt sein und somit trotz einer relativ kurzen Einbaulänge auch bei relativ niedriger Erregerleistung zu den für die Messung von Durchfluss bzw. Dichte erforderlichen Schwingungsamplituden angeregt werden.

Die beiden zueinander parallel angeordneten, im wesentlichen identisch geformten Messrohre gemäß der in der US-A 57 96 001 bzw. der WO-A 01/ 33 174 beschriebenen Messgeräte sind im wesentlichen stetig gekrümmt, d.h. sie sind praktisch nirgends gerade. Demgegenüber weisen die Messrohre z.B. der in den US-A 53 01 557, WO-A 00/ 57 141, WO-A 01/ 33 174 gezeigten Messgeräte jeweils wenigstens zwei gerade Rohrsegmente auf, die über ein bogenförmiges, insb. kreisbogenförmiges, Rohrsegment miteinander in Verbindung. Derart gekrümmte Messrohre mit geraden Rohrsegmenten zeichnen im Vergleich zu stetig gekrümmten Messrohren insb. dadurch aus, dass sie mittels sehr einfacher Biegewerkzeuge kostengünstig gefertigt werden können.

Bevorzugt werden die Messrohre im Betrieb bei einer natürlichen momentanen Resonanzfrequenz vibrieren gelassen. Da die natürliche Resonanzfrequenz von der momentanen Dichte des Fluids abhängig ist, kann mittels marktüblicher Coriolis-Massedurchflussmessgeräten neben dem Massedurchfluss so z.B. auch die Dichte von strömenden Fluiden gemessen werden.

Zum Erfassen von Schwingungen der Messrohre weisen die Messgeräte eine Sensoranordnung mit wenigstens einem einlassseitigen und wenigstens einem auslassseitigen Schwingungssensor auf, der insbesondere ein elektrodynamischer Sensor sein kann. Aufgrund der Überlagerung von Nutz-und Coriolismode weisen die mittels der Sensoranordnung einlassseitig und auslassseitig erfassten Schwingungen der Messrohre eine durchflussabhängige Phasendifferenz auf, die anhand von Signalen der elektrodynamischen Sensoren ermittelbar ist.

Coriolis Durchflussmessgeräte bzw. Dichtemessgeräte können eine Querempfindlichkeit zu Temperatureinflüssen und dem Mediendruck aufweisen. Zur Kompensation solcher temperaturbedingten Störeinflüsse ist bei Coriolis-Massedurchflussmessgeräten bzw. Dichtemessgeräten daher üblicherweise auch mindestens ein Temperatursensor z.B. für die Messung der Temperatur des Messrohrs oder einer Messrohrumgebung vorgesehen.

Auf die Querempfindlichkeit zum Mediendruck wird unter anderem in den folgenden Dokumenten hingewiesen: EP 1 296 119 A1, US-A 53 01 557, WO-A 95/ 16 897, und WO-A 98/ 07 009. Diese Querempfindlichkeit der Messgeräte auf Druck kann unter anderem damit erklärt werden, dass die Messrohre eine vom Mediendruck abhängige Steifigkeit aufweisen. Um Messfehler von nicht mehr als ±0.15% des tatsächlichen Massedurchflusses oder der tatsächlichen Dichte auch bei schwankendem Mediendruck zu gewährleisten, sind daher Maßnahmen zur Verringerung der Druckabhängigkeit der Messsignale erforderlich.

Zur Lösung des Problems wird z.B. in der US-A 53 01 557 vorgeschlagen, Messrohre von vergleichsweise großer Wandstärke zu verwenden. Damit sinkt zwar die Druckabhängigkeit, aber gleichzeitig nimmt die Masse des Messrohres zu, so dass der relative Beitrag des Mediums zur Masse des gefüllten Messrohrs abnimmt, wodurch die Empfindlichkeit bei der Dichtemessung abnimmt. Zudem wird das Messrohr insgesamt steifer, so dass eine höhere Erregerleistung erforderlich ist, um noch die gleichen Schwingungsamplituden zu erzielen.

Eine weitere Möglichkeit zur Verringerung der Querempfindlichkeit des Messgerätes auf Druck ist in der WO-A 98/ 07 009 bzw. der WO-A 95/ 16 897 beschrieben. Es wird vorgeschlagen, den Mediendruck anhand der Resonanzfrequenzen zweier verschiedener Schwingungsmoden zu ermitteln und bei der Ermittlung des Massedurchflusses zu berücksichtigen. Dies erfordert einen zusätzlichen Erreger und erhöhte Rechenleistung zur Messwertentwicklung. Die Veröffentlichungen EP 1 296 119 A1 bzw. US 2005/072238 A1 offenbaren, die Messrohre mittels einer lokalen Versteifung zu stabilisieren, um den Einfluss des Innendrucks auf die Biegeschwingungen zu verringern. Die relativ geringen Zusatzmassen der Versteifungen beeinträchtigen die Empfindlichkeit auf die primären Messgrößen Massedurchfluss und Dichte kaum beeinträchtigt werden. Dieser Ansatz ist grundsätzlich interessant, lässt aber noch Raum für Verbesserungen.

Ausgehend vom genannten Stand der Technik liegt daher der Erfindung die Aufgabe zugrunde, einen für ein verbessertes Coriolis-Massedurchflussmessgerät bzw. Dichtemessgerät bereitzustellen, dessen Messrohre einfach herzustellen sind und dessen Querempfindlichkeit für den Innendruck oder für dessen Änderungen gering gehalten werden kann. Die Aufgabe wird gelöst durch das Coriolis-Massedurchflussmessgerät bzw. Dichtemessgerät gemäß dem unabhängigen Patentanspruch 1.

Das erfindungsgemäße Coriolis-Massedurchflussmessgerät bzw. Dichtemessgerät umfasst mindestens zwei in der Ruhelage gebogen verlaufende Messrohre, wobei die Messrohre Messrohrmittenlinien aufweisen, welche paarweise spiegelsymmetrisch zu einer ersten Spiegelebene verlaufen, die sich zwischen den Messrohren erstreckt, wobei die Messrohrmittenlinien spiegelsymmetrisch jeweils zu einer zweiten Spiegelebene verlaufen die sich senkrecht zur ersten Spiegelebene erstreckt; mindestens eine Erregeranordnung und mindestens eine Sensoranordnung; einlaufseitig und auslaufseitig jeweils einen Sammler, wobei die Messrohre jeweils einlaufseitig und auslaufseitig mit einem Sammler strömungstechnisch zusammengefasst sind;
einen Trägerkörper, welcher den einlaufseitigen Sammler und den auslaufseitigen Sammler starr miteinander verbindet; und
einlaufseitig sowie auslaufseitig jeweils zwei oder mehr plattenförmige Koppler, wobei die Messrohre mittels der Koppler paarweise miteinander verbunden sind, um einen Oszillator zu bilden,
wobei die Erregeranordnung dazu eingerichtet ist, einen Biegeschwingungsnutzmode zwischen den beiden Messrohren des Oszillators anzuregen,
wobei die Sensoranordnung dazu eingerichtet ist, Schwingungen des Oszillators zu erfassen,
wobei die Messrohrmittenlinien der Messrohre mindestens eines Oszillators zwischen der zweiten Spiegelebene und den Sammlern jeweils einen ersten gebogenen Abschnitt, einen zweiten gebogenen Abschnitt und einen zwischen den gebogenen Abschnitten angeordneten, geraden Abschnitt aufweisen, an den die beiden gebogenen Abschnitte anschließen, wobei der erste gebogene Abschnitt und der zweite gebogene Abschnitt in entgegengesetzte Richtungen gebogen sind, wobei der zweite gebogene Abschnitt jeweils auf der der zweiten Spiegelebene abgewandten Seite des geraden Abschnitts angeordnet ist,
wobei die Projektion der Messrohrmittenlinie zwischen dem Schnittpunkt mit der zweiten Spiegelebene und dem Übergang zwischen dem geraden Abschnitt und dem zweiten gebogenen Abschnitt auf die zweite Spiegelebene eine Bogenhöhe (h) definiert, wobei der doppelte Abstand zwischen der zweiten Spiegelebene und der Messrohrmittenlinie am Übergang zwischen dem geraden Abschnitt und dem zweiten gebogenen Abschnitt eine Bogenweite (w) definiert, wobei der Quotient aus der Bogenhöhe (h) geteilt durch die Bogenweite (w) eine relative Bogenhöhe (hᵣ) definiert, die nicht weniger als 0,5, insbesondere nicht weniger als 0,65 beträgt,
wobei die Versteifungskörper symmetrisch zur ersten Spiegelebene und paarweise symmetrisch zur zweiten Spiegelebene angeordnet sind,
wobei der erste gebogene Abschnitt zwischen der zweiten Spiegelebene und dem geraden Abschnitt mehrere Versteifungskörper aufweist, welche das Messrohr ringförmig umgreifen,
wobei einlassseitig und auslassseitig jeweils mindestens zwei Koppler, zwischen den durch den Koppler verbundenen Messrohren eine durch einen geschlossenen Rand umgebene Stimmöffnung zum Beeinflussen der Schwingungseigenschaften des Oszillators aufweisen, wobei die Stimmöffnungen in der ersten Spiegelebene eine Erstreckung von mindestens 70% des Durchmessers der Messrohre aufweisen,
wobei jeweils einer der Koppler, welcher der zweiten Spiegelebene am nächsten ist, und welcher in dem zweiten gebogenen Abschnitt angeordnet ist, eine Mittenebene aufweist, wobei ein Kopplerabstandswinkel αₖ₁, gemessen vom Zentrum der Krümmungsradien der Messrohrmittelachse, ein Maß für den Abstand dieses Kopplers vom Übergang zwischen dem geraden Abschnitt und dem zweiten gebogenen Abschnitt 118 ist, wobei der Kopplerabstandswinkel αₖ₁ nicht mehr als 10° beträgt,
wobei die Messrohrmittenlinie im zweiten gerade Abschnitt zu einem Normalenvektor zur zweiten Spiegelebene einen Winkel von nicht weniger als 60°, insbesondere nicht weniger als 70° aufweist,
wobei das Coriolis-Massedurchflussmessgerät bzw. Dichtemessgerät einen Durchflusskalibrierfaktor (calf) für den Massedurchfluss als Funktion eines Schwingverhaltens des Oszillators aufweist, wobei der Durchflusskalibrierfaktor (calf) eine Druckabhängigkeit (d calf/ d p) aufweist für die gilt |1/calf* d calf/ dpl < 70 ppm/bar,
wobei das Coriolis-Massedurchflussmessgerät bzw. Dichtemessgerät einen Dichtekalibrierfaktor für die Dichte (crho) als Funktion zumindest einer Eigenfrequenz (f1) des Oszillators aufweist, wobei der Dichtekalibrierfaktor (crho) eine Druckabhängigkeit (d crho / d p) aufweist für die gilt |1 / crho* d crho / dp| < 60 ppm/bar, insbesondere < 40 ppm/bar.

In einer Weiterbildung der Erfindung weist jeweils der Koppler, welcher der zweiten Spiegelebene am nächsten ist, eine Mittenebene auf, die nicht mehr als die Hälfte, insbesondere nicht mehr als ein Drittel, bevorzugt nicht mehr als ein Viertel des Außendurchmessers der mit dem Koppler verbundenen Messrohre von der Messrohrmittenlinie am Übergang zwischen dem geraden Abschnitt und dem zweiten gebogenen Abschnitt beabstandet ist.

In einer Weiterbildung der Erfindung weist erste gebogene Abschnitt zwischen der zweiten Spiegelebene und dem geraden Abschnitt mindestens drei, insbesondere mindestens vier Versteifungskörper auf, welche das Messrohr ringförmig umgreifen.

In einer Weiterbildung der Erfindung weisen die Versteifungskörper in Richtung der Messrohrmittenlinie eine Stärke auf, die nicht mehr als ein Viertel, insbesondere nicht mehr als einem Achtel des Außendurchmessers des Messrohrs beträgt.

In einer Weiterbildung der Erfindung weisen die Versteifungskörper in radialer Richtung eine Stärke auf, die mindestens eine, insbesondere mindestens zwei Wandstärken des Messrohrs beträgt.

In einer Weiterbildung der Erfindung beträgt die relative Bogenhöhe (hᵣ) nicht mehr als 1,5, insbesondere nicht mehr 1,0.

In einer Weiterbildung der Erfindung sind die einlaufseitig und auslaufseitig vorgesehenen Sammler derart stabil ausgestaltet, dass sie die Funktionalität eines Kopplers erfüllen.

Die Erfindung wird nun anhand der in den Zeichnungen dargestellten Ausführungsbeispiele näher erläutert. Es zeigt:
Fig. 1: eine schematische Seitenansicht eines ersten Ausführungsbeispiels eines erfindungsgemäßen Coriolis-Massedurchflussmessgeräts bzw. Dichtemessgeräts;
Fig. 2: eine Seitenansicht eines Details des in Fig. 1 dargestellten Ausführungsbeispiels;
Fig. 3: ein Koordinatensystem zur Erläuterung der Symmetrien des erfindungsgemäßen Coriolis-Massedurchflussmessgeräts bzw. Dichtemessgeräts.

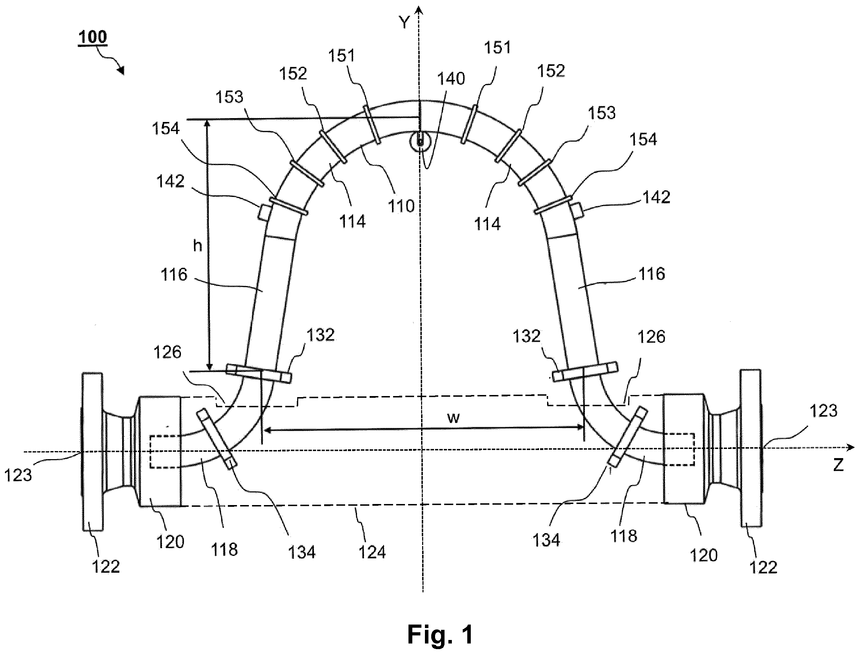

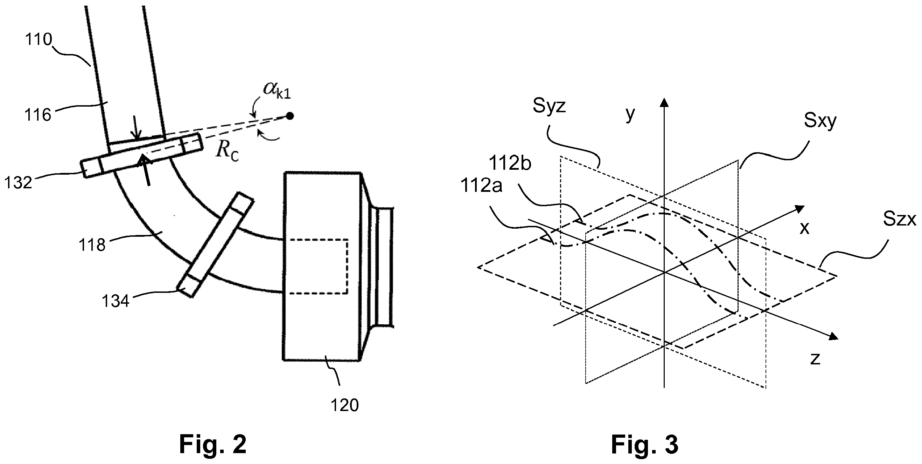

Das in Fign. 1 und 2 dargestellte Ausführungsbeispiel eines erfindungsgemäßen Coriolis-Massedurchflussmessgeräts bzw. Dichtemessgeräts 100 umfasst ein Paar von gebogenen Messrohren 110. Die Messrohre 110 erstrecken sich zwischen einem einlassseitigen Sammler 120 und einem auslassseitigen Sammler 120, und sind mit diesen fest verbunden, beispielsweise durch Einwalzen, Hartlöten oder Schweißen. Zwischen den Sammlern 120 erstreckt sich ein massives Trägerrohr 124, das mit beiden Sammlern fest verbunden ist, wodurch die Sammler 120 starr miteinander gekoppelt sind. Das Trägerrohr 124 weist an seiner Oberseite Öffnungen 126 auf, durch welche die Messrohre 110 von den Sammlern 120 aus dem Trägerrohr 124 heraus und wieder zurück geführt sind.

Die Sammler 120 weisen endständig jeweils einen Flansch 122 auf, mittels dessen das Coriolis-Massedurchflussmessgerät bzw. Dichtemessgerät in einer Rohrleitung zu installieren ist. Durch zentrale Öffnungen 123 in den Flanschen 122 ist ein Massestrom durch die Rohrleitungen 110 zu führen, um den Massestrom bzw. dessen Dichte zu messen.

Bevor der detaillierte Aufbau und die Funktionsweise des erfindungsgemäßen Coriolis-Massedurchflussmessgeräts bzw. Dichtemessgeräts 100 weiter erläutert werden, sollen kurz anhand von Fig. 3 einige Symmetrieeigenschaften vorgestellt werden. In Fig. 3 sind Messrohrmittelachsen 112a, 112b der beiden Messrohr 110 dargestellt, welche den Oszillator bilden. Die Messrohrmittelachsen 112a, 112b verlaufen symmetrisch zu einer ersten Spiegelebene Syz, welche zwischen den Messrohren verläuft. Die Messrohrmittelachsen verlaufen weiterhin symmetrisch zu einer zweiten Spiegelebene Sxy, welche senkrecht zur ersten Spiegelebene Syz verläuft. In der zweiten Spiegelebene liegen Scheitelpunkte der Messrohre bzw. der Messrohrmittelachsen.

Die Messrohrachsen 112a, 112b verlaufen vorzugsweise in Ebenen, die parallel zur ersten Spiegelebene verlaufen.

Bezüglich einer dritte Ebene Szx, welche senkrecht zur ersten Spiegelebene und zur zweiten Spiegelebene verläuft, und in welcher die Messrohrachsen 112a, 112b in den Sammlern verlaufen ist keine Symmetrie der Messrohre gegeben.

Die Schnittlinie zwischen der ersten Spiegelebene Syz und der dritten Ebene definiert eine Z-Achse eines Koordinatensystems des Coriolis-Massedurchflussmessgeräts bzw. Dichtemessgeräts. Die Schnittlinie zwischen der zweiten Spiegelebene Sxy und der dritten Ebene Szx definiert eine X-Achse des Koordinatensystems, und die Schnittlinie zwischen ersten Spiegelebene Syz und der zweiten Spiegelebene definiert die Y-Achse des Koordinatensystems. Mit den solchermaßen definierten Koordinaten wenden wir uns wieder Fign.1 und 2 zu.

Die Messrohre 110 bilden paarweise einen Oszillator, der insbesondere in einem Biegeschwingungsnutzmode anzuregen ist, bei dem die Messrohre gegenphasig zueinander in X-Richtung schwingen.

Zur Beeinflussung der Schwingungseigenschaften sind die Messrohre 110 einlassseitig und auslassseitig jeweils mit Kopplern 132, 134 verbunden, wobei durch die Position der beiden inneren der Koppler 132, also jener, welche einlassseitig bzw. auslassseitig jeweils am weitesten vom entsprechenden Sammler 120 entfernt sind, eine freie Schwingungslänge eines durch die beiden Messrohre 110 gebildeten Oszillators festgelegt ist. Diese freie Schwingungslänge hat großen Einfluss auf den Biegeschwingungsnutzmode des Oszillators, insbesondere auf dessen Eigenfrequenz, mit welcher der Oszillator vorzugsweise anzuregen ist.

Äußere Koppler 134, die jeweils zwischen den inneren Knotenplatten 132 und den Sammlern 120 angeordnet sind, dienen insbesondere dazu, weitere Schwingungsknoten zu definieren, um einerseits die mechanischen Maximalspannungen an den schwingenden Messrohren zu reduzieren, und andererseits das Auskoppeln von Schwingungsenergie in eine Rohrleitung, in welcher das Coriolis-Massedurchflussmessgerät bzw. Dichtemessgerät montiert ist, bzw. das Einkoppeln von Störschwingungen aus der Rohrleitung zu minimieren. Die Koppler weisen von einem umlaufenden Rand umgebene Stimmöffnungen in der ersten Spiegelebene auf, durch welche das Auskoppeln von Schwingungsenergie weiter zu minimieren ist. Die Koppler sind symmetrisch zur ersten Spiegeleben und paarweise symmetrisch zur zweiten Spiegelebene angeordnet.

Zum Anregen von Biegeschwingungen der Messrohre in X-Richtung ist - bezogen auf die Längsrichtung bzw. die Z-Achse in der Mitte des Coriolis-Massedurchflussmessgeräts bzw. Dichtemessgeräts 100 - zwischen den beiden Messrohren110 eine Erregeranordnung 140 vorgesehen, beispielsweise jeweils eine induktive Erregeranordnung, die beispielsweise eine Tauchspule an einem Messrohr und einen Tauchkörper am gegenüberliegenden Messrohr umfasst. Der durch die beiden Messrohre gebildete Oszillator ist vorzugsweise mit seiner aktuellen Eigenfrequenz anzuregen. Zum Erfassen der Schwingungen der Messrohre sind in Längsrichtung symmetrisch zur Erregeranordnungen 140 Sensoranordnungen 142 vorgesehen, die jeweils als induktive Anordnung mit einer Tauchspule an einem Rohr und einem Tauchkörper am anderen Rohr gestaltet sind. Einzelheiten dazu sind dem Fachmann bekannt, und brauchen hier nicht näher erläutert zu werden.

Bei dem in Fig. 1 dargestellten Ausführungsbeispiel sind die Sensoranordnungen 142 außerhalb eines von den Messrohren 110 und dem Trägerrohr 124 umschlossenen Bereichs angeordnet. auf der Innenseite eines durch die Scheitelpunkte der Messrohre verlaufenden Messrohrbogens angeordnet. Selbstverständlich können die Sensoranordnungen auch innerhalb des umschlossenen Bereichs angeordnet sein, beispielsweise um eine etwas kompaktere Bauform zu erzielen.

Die Messrohre 110 weisen jeweils zwei bezüglich der zweiten Spiegelebene zueinander symmetrische erste gebogene Abschnitte 114 auf, die in der zweiten Spiegelebene aneinander anschließen. Jeder der ersten gebogenen Abschnitte 114 weist einen Biegewinkel von etwa 80° auf, wobei der Krümmungsradius der Rohrmittelachse in den ersten gebogenen Abschnitten hier nicht weniger als acht, insbesondere etwa neun Rohrradien beträgt. An den ersten gebogenen Abschnitt 114 schließt jeweils ein gerader Abschnitt 116 an, an den wiederum ein jeweils ein zweiter gebogener Abschnitt 118 anschließt, dessen Krümmungsradius hier etwa zwei Drittel des Krümmungsradius des erste gebogenen Abschnitts 114 beträgt.

Die zweiten gebogenen Abschnitte 118 verlaufen jeweils durch eine der Öffnungen 126 in dem Trägerrohr 124 und münden in einen der Sammler 120.

Die ersten gebogenen Abschnitte 114 weisen jeweils vier ringförmige Versteifungskörper 151, 152, 153, 154 auf, welche über den ersten gebogenen Abschnitt 114 verteilt sind. Die Verteilung muss - wie vorliegend - nicht gleichmäßig sein. Die konkrete Verteilung kann ggf. zur optimierten Reduktion der Querempfindlichkeit der Messgrößen Massedurchfluss und / oder Dichte gegenüber Druck variiert werden.

Zur Positionierung der inneren Koppler 132 sind die folgenden Erwägungen zu berücksichtigen. Einerseits ist es vorteilhaft, wenn die Messrohre 110, eine große freie Schwingungslänge aufweisen. Hierzu werden die Messrohre in dem zweiten gebogenen Abschnitt 118 aus dem Trägerrohr 124 herausgeführt, wobei die freie Schwingungslänge mit zunehmender Bogenhöhe steigt. Die Optimierung der freien Schwingungslänge würde dafür sprechen, den inneren Koppler, welcher die freie Schwingungslänge begrenzt, möglichst tief zu positionieren. Ein Teil der der gewonnenen Bogenhöhe wird wieder "verschenkt" - im dargestellten Ausführungsbeispiel etwa ein Viertel der Bogenhöhe, um zu gewährleisten, dass allenfalls nur ein kurzer Teil des zweiten gebogenen Abschnitts 118 oberhalb des ersten Kopplers 132 verläuft. Untersuchungen im Zusammenhang mit der vorliegenden Erfindung haben ergeben, dass die Druckabhängigkeit der Dichtemessung reduziert werden kann, wenn der Anteil der zweiten gebogenen Abschnitte 118 oberhalb der ersten Koppler 132 nicht zu groß ist, wie in Fig. 2 dargestellt ist. Der Kopplerabstandswinkel αₖ₁, gemessen vom Zentrum der Krümmungsradien der Messrohrmittelachse, ist ein Maß für den Abstand des ersten Kopplers 132 vom Übergang zwischen dem geraden Abschnitt 116 und dem zweiten gebogenen Abschnitt 118. Der Kopplerabstandswinkel αₖ₁ sollte nicht mehr als 10° betragen und weist im Ausführungsbeispiel einen Wert von etwa 5° bis 6° auf. Anders ausgedrückt sollte der Abstand der Kopplermittenebene des ersten Kopplers 132 vom Übergang zwischen dem geraden Abschnitt 116 und dem zweiten gebogenen Abschnitt 118 nicht mehr als einen halben Außendurchmesser des Messrohrs betragen. Im dargestellten Ausführungsbeispiel beträgt dieser Abstand gut ein Viertel des Außendurchmessers.

Das erfindungsgemäße Coriolis-Massedurchflussmessgeräts bzw. Dichtemessgeräts weist aufgrund der erfindungsgemäßen Messrohrgeometrie eine hohe Empfindlichkeit zur genauen Messung von Dichte und Massedurchfluss auf, wobei die mit der Messrohrgeometrie einhergehenden Querempfindlichkeiten zum statischen Druck durch die beschriebenen Maßnahmen wie die Position der ersten Koppler 132 und der Versteifungskörper 151, 152, 153, 154 im ersten gebogenen Abschnitt 114 Auf diese Weise wird die Druckabhängigkeit der Dichtemessung erheblich reduziert. Ergebnisse hierzu sind in Tabelle 1 angegeben. Darin bezeichnet der Begriff "Calf" einen Kalibrierfaktor, Proportionalitätsfaktor, um aus der Phasendifferenz zwischen den Sensoren 142 der Sensoranordnung den Massedurchfluss zu ermitteln.

## Patentansprüche

1. Coriolis-Massedurchflussmessgerät bzw. Dichtemessgerät (100) umfassend:
mindestens zwei in der Ruhelage gebogen verlaufende Messrohre (110, 110a, 110b),
wobei die Messrohre Messrohrmittenlinien aufweisen, welche paarweise spiegelsymmetrisch zu einer ersten Spiegelebene verlaufen, die sich zwischen den Messrohren (110a, 11 0b) erstreckt,
wobei die Messrohrmittenlinien spiegelsymmetrisch jeweils zu einer zweiten Spiegelebene verlaufen, die sich senkrecht zur ersten Spiegelebene erstreckt;
mindestens eine Erregeranordnung (140) und mindestens eine Sensoranordnung (142a, 142b);
einlaufseitig und auslaufseitig jeweils einen Sammler (120a, 120a), wobei die Messrohre jeweils einlaufseitig und auslaufseitig mit einem Sammler (3) strömungstechnisch zusammengefasst sind;
einen Trägerkörper (124), welcher den einlaufseitigen Sammler (120a) und den auslaufseitigen Sammler (120b) starr miteinander verbindet; und
einlaufseitig und auslaufseitig jeweils zwei oder mehr plattenförmige Koppler (132, 134), wobei die Messrohre mittels der Koppler paarweise miteinander verbunden sind, um einen Oszillator zu bilden,
wobei die Erregeranordnung (140) dazu eingerichtet ist, einen Biegeschwingungsnutzmode zwischen den beiden Messrohren des Oszillators anzuregen,
die Sensoranordnung (142a, 142b) dazu eingerichtet ist, Schwingungen des Oszillators zu erfassen,
wobei die Messrohrmittenlinien der Messrohre mindestens eines Oszillators zwischen der zweiten Spiegelebene und den Sammlern jeweils einen ersten gebogenen Abschnitt, einen zweiten gebogenen Abschnitt und einen zwischen den gebogenen Abschnitten angeordneten, geraden Abschnitt aufweisen, an den die beiden gebogenen Abschnitte anschließen, wobei der erste gebogene Abschnitt und der zweite gebogene Abschnitt in entgegengesetzte Richtungen gebogen sind, wobei der zweite gebogene Abschnitt jeweils auf der der zweiten Spiegelebene abgewandten Seite des geraden Abschnitts angeordnet ist,
wobei der erste gebogene Abschnitt zwischen der zweiten Spiegelebene und dem geraden Abschnitt mehrere Versteifungskörper aufweist, welche das Messrohr ringförmig umgreifen,
wobei die Projektion der Messrohrmittenlinie zwischen dem Schnittpunkt mit der zweiten Spiegelebene und dem Übergang zwischen dem geraden Abschnitt und dem zweiten gebogenen Abschnitt auf die zweite Spiegelebene eine Bogenhöhe (h) definiert, wobei der doppelte Abstand zwischen der zweiten Spiegelebene und der Messrohrmittenlinie am Übergang zwischen dem geraden Abschnitt und dem zweiten gebogenen Abschnitt eine Bogenweite (w) definiert, wobei der Quotient aus der Bogenhöhe (h) geteilt durch die Bogenweite (w) eine relative Bogenhöhe (hᵣ) definiert,
wobei die Koppler (132a, 132b, 134a, 134b) symmetrisch zur ersten Spiegelebene und paarweise symmetrisch zur zweiten Spiegelebene angeordnet sind,
wobei jeweils einer der Koppler (132), welcher der zweiten Spiegelebene am nächsten ist, und welcher im zweiten gebogenen Abschnitt angeordnet ist, eine Mittenebene aufweist, wobei ein Kopplerabstandswinkel αₖ₁, gemessen vom Zentrum der Krümmungsradien der Messrohrmittelachse, ein Maß für den Abstand des ersten Kopplers (132) vom Übergang zwischen dem geraden Abschnitt (116) und dem zweiten gebogenen Abschnitt (118) ist,
wobei das Coriolis-Massedurchflussmessgerät bzw. Dichtemessgerät (100) einen Durchflusskalibrierfaktor (calf) für den Massedurchfluss als Funktion eines Schwingverhaltens des Oszillators aufweist,
wobei das Coriolis-Massedurchflussmessgerät bzw. Dichtemessgerät (100) einen Dichtekalibrierfaktor für die Dichte (crho) als Funktion zumindest einer Eigenfrequenz (f1) des Oszillators aufweist,
**dadurch gekennzeichnet, dass:**
die relative Bogenhöhe nicht weniger als 0,5, insbesondere nicht weniger als 0,65 beträgt,
einlassseitig und auslassseitig jeweils mindestens zwei der Koppler (132a, 132b, 134a, 134b) eines durch die Koppler verbundenen Messrohrpaars (110a, 110b), zwischen den durch den Koppler verbundenen Messrohren (110a, 110b) eine durch einen geschlossenen Rand umgebene Stimmöffnung zum Beeinflussen der Schwingungseigenschaften des Oszillators aufweisen, wobei die Stimmöffnungen in der ersten Spiegelebene eine Erstreckung von mindestens 70%, des Durchmessers der Messrohre (110a, 110b) aufweisen,
die Messrohrmittenlinie im zweiten geraden Abschnitt zu einem Normalenvektor zur zweiten Spiegelebene einen Winkel von nicht weniger als 60°, insbesondere nicht weniger als 70° aufweist,
der Kopplerabstandswinkel nicht mehr als 10° beträgt,
der Dichtekalibrierfaktor (crho) eine Druckabhängigkeit (d crho / d p) aufweist, für die gilt |1 / crho* d crho / dp| < 60 ppm/bar, und
der Durchflusskalibrierfaktor (calf) eine Druckabhängigkeit (d calf/ d p) aufweist, für die gilt |1/calf* d calf/ dpl < 70 ppm/bar.

2. Coriolis-Massedurchflussmessgerät bzw. Dichtemessgerät (100) nach Anspruch 1,
wobei jeweils der Koppler (132), welcher der zweiten Spiegelebene am nächsten ist, eine Mittenebene aufweist, die nicht mehr als die Hälfte, insbesondere nicht mehr als ein Drittel, bevorzugt nicht mehr als ein Viertel des Außendurchmessers dₐ der mit diesem Koppler verbundenen Messrohre vom Übergang zwischen dem geraden Abschnitt und dem zweiten gebogenen Abschnitt an der Messrohrmittenlinie beabstandet ist.

3. Coriolis-Massedurchflussmessgerät bzw. Dichtemessgerät (100) nach Anspruch 2, wobei der erste gebogene Abschnitt zwischen der zweiten Spiegelebene und dem geraden Abschnitt mindestens drei, insbesondere mindestens vier Versteifungskörper aufweist, welche das Messrohr ringförmig umgreifen.

4. Coriolis-Massedurchflussmessgerät bzw. Dichtemessgerät (100) nach einem der vorhergehenden Ansprüche, wobei die Versteifungskörper in Richtung der Messrohrmittenlinie eine Stärke aufweisen, die nicht mehr als ein Viertel, insbesondere nicht mehr als einem Achtel des Außendurchmessers des Messrohrs beträgt.

5. Coriolis-Massedurchflussmessgerät bzw. Dichtemessgerät (100) nach einem der vorhergehenden Ansprüche, wobei die Versteifungskörper in radialer Richtung eine Stärke aufweisen, die mindestens eine, insbesondere mindestens zwei Wandstärken des Messrohrs beträgt.

6. Coriolis-Massedurchflussmessgerät bzw. Dichtemessgerät (100) nach einem der vorhergehenden Ansprüche, wobei die relative Bogenhöhe (hᵣ) nicht mehr als 1,5, insbesondere nicht mehr 1,0 beträgt.

7. Coriolis-Massedurchflussmessgerät bzw. Dichtemessgerät (100) nach einem der vorhergehenden Ansprüche, wobei der Dichtekalibrierfaktor (crho) eine Druckabhängigkeit (d crho / d p) aufweist für die gilt |1 / crho* d crho / dp| < 40 ppm/bar.

## Claims

1. A Coriolis mass flow meter or density meter (100), comprising:
At least two measuring tubes (110, 110a, 110b) that are curved in their resting position,
wherein the measuring tubes have measuring tube center lines which run in pairs mirror-symmetrically to a first mirror plane which extends between the measuring tubes (110a, 110b),
wherein the measuring tube center lines each run mirror-symmetrically to a second mirror plane which extends perpendicular to the first mirror plane;
at least one exciter assembly (140) and at least one sensor assembly (142a, 142b);
a collector (120a, 120a) on the inlet side and one on the outlet side, wherein the measuring tubes are each combined with a collector (3) on the inlet side and outlet side in terms of flow;
a support body (124), which rigidly connects the inlet-side collector (120a) and the outlet-side collector (120b); and
two or more plate-shaped couplers (132, 134) on the inlet side and on the outlet side in each case, wherein the measuring tubes are connected to one another in pairs by means of the couplers to form an oscillator,
wherein the exciter assembly (140) is configured to initiate a bending vibration useful mode between the two measuring tubes of the oscillator,
the sensor assembly (142a, 142b) is configured to detect oscillations of the oscillator,
wherein the measuring tube center lines of the measuring tubes of at least one oscillator between the second mirror plane and the collectors each have a first curved section, a second curved section, and a straight section arranged between the curved sections, to which the two curved sections are connected, wherein the first curved section and the second curved section are curved in opposite directions, wherein the second curved section is arranged in each case on the side of the straight section facing away from the second mirror plane,
wherein the first curved section between the second mirror plane and the straight section has several stiffening bodies which surround the measuring tube in a ring shape,
wherein the projection of the measuring tube center line between the point of intersection with the second mirror plane and the transition between the straight section and the second curved section onto the second mirror plane defines an arc height (h), wherein twice the distance between the second mirror plane and the measuring tube center line at the transition between the straight section and the second curved section defines an arc width (w), wherein the quotient of the arc height (h) divided by the arc width (w) defines a relative arc height (hᵣ),
wherein the couplers (132a, 132b, 134a, 134b) are arranged symmetrically to the first mirror plane and in pairs symmetrically to the second mirror plane,
wherein, in each case, one of the couplers (132), which is closest to the second mirror plane and which is arranged in the second curved section, has a center plane, wherein a coupler spacing angle αₖ₁, measured from the center of the radii of curvature of the measuring tube center axis, is a measure of the distance of the first coupler (132) from the transition between the straight section (116) and the second curved section (118),
wherein the Coriolis mass flow meter or density meter (100) has a flow calibration factor (calf) for the mass flow as a function of an oscillation behavior of the oscillator,
wherein the Coriolis mass flow meter or density meter (100) has a density calibration factor for the density (crho) as a function of at least one natural frequency (f1) of the oscillator,
**characterized in that:**
the relative arc height is not less than 0.5, in particular not less than 0.65,
on the inlet side and outlet side, at least two of the couplers (132a, 132b, 134a, 134b) of a pair of measuring tubes (110a, 110b) connected by the couplers each have, between the measuring tubes (110a, 110b) connected by the couplers, a tuning opening surrounded by a closed edge for influencing the oscillation characteristics of the oscillator, wherein the tuning openings in the first mirror plane have an extension of at least 70% of the diameter of the measuring tubes (110a, 110b),
the measuring tube center line in the second straight section has an angle of not less than 60°, in particular not less than 70°, relative to a normal vector to the second mirror plane,
the coupler spacing angle is not more than 10°,
the density calibration factor (crho) has a pressure dependence (d crho / d p) for which |1 / crho* d crho / dpl < 60 ppm/bar, and
the flow calibration factor (calf) has a pressure dependence (d calf / d p) for which |1 / calf* d calf / dpl < 70 ppm/bar.

2. The Coriolis mass flow meter or density meter (100) as claimed in claim 1,
wherein, in each case, the coupler (132) that is closest to the second mirror plane has a center plane that is spaced from the transition between the straight section and the second curved section at the measuring tube center line by not more than half, in particular not more than one third, preferably not more than one quarter, of the outer diameter da of the measuring tubes connected to this coupler.

3. The Coriolis mass flow meter or density meter (100) as claimed in claim 2, wherein the first curved section between the second mirror plane and the straight section has at least three, in particular at least four, stiffening bodies which surround the measuring tube in a ring shape.

4. The Coriolis mass flow meter or density meter (100) as claimed in one of the preceding claims, wherein the stiffening bodies have a thickness in the direction of the measuring tube center line which is not more than one quarter, in particular not more than one eighth, of the outer diameter of the measuring tube.

5. The Coriolis mass flow meter or density meter (100) as claimed in one of the preceding claims, wherein the stiffening bodies have a thickness in the radial direction which is at least one, in particular at least two, wall thicknesses of the measuring tube.

6. The Coriolis mass flow meter or density meter (100) as claimed in one of the preceding claims, wherein the relative arc height (hᵣ) is not more than 1.5, in particular not more than 1.0.

7. The Coriolis mass flow meter or density meter (100) as claimed in one of the preceding claims, wherein the density calibration factor (crho) has a pressure dependence (d crho / d p) for which |1 / crho* d crho /dp| < 40 ppm/bar.

## Revendications

1. Débitmètre Coriolis ou densimètre (100) comprenant :
au moins deux tubes de mesure (110, 110a, 110b) s'étendant de manière courbée dans la position de repos,
les tubes de mesure présentant des lignes médianes de tube de mesure qui s'étendent par paires symétriquement par rapport à un premier plan de miroir, lequel plan s'étend entre les tubes de mesure (110a, 110b),
les lignes médianes de tube de mesure s'étendant chacune de manière symétrique par rapport à un deuxième plan de miroir, lequel plan s'étend perpendiculairement au premier plan de miroir ;
au moins un dispositif d'excitation (140) et au moins un arrangement de capteurs (142a, 142b) ;
côté entrée et côté sortie, respectivement un collecteur (120a, 120a), les tubes de mesure étant respectivement réunis en termes d'écoulement côté entrée et côté sortie avec un collecteur (3) ;
un corps de support (124), lequel relie de façon rigide le collecteur côté entrée (120a) et le collecteur côté sortie (120b) ; et
côté entrée et côté sortie, deux ou plusieurs coupleurs (132, 134) en forme de plaques, les tubes de mesure étant reliés entre eux par paires au moyen des coupleurs afin de former un oscillateur,
le dispositif d'excitation (140) étant conçu pour exciter un mode utile de vibration de flexion entre les deux tubes de mesure de l'oscillateur,
l'arrangement de capteurs (142a, 142b) étant conçu pour détecter les vibrations de l'oscillateur,
les lignes médianes de tube de mesure d'au moins un oscillateur présentant, entre le deuxième plan de miroir et les collecteurs, respectivement une première section courbée, une deuxième section courbée et une section droite disposée entre les sections courbées, section droite à laquelle se raccordent les deux sections courbées, la première section courbée et la deuxième section courbée étant courbées dans des directions opposées, la deuxième section courbée étant disposée respectivement sur le côté de la section droite opposé au deuxième plan de miroir,
la première section courbée entre le deuxième plan de miroir et la section droite comprenant plusieurs corps de renforcement, lesquels entourent le tube de mesure de manière annulaire,
la projection de la ligne médiane du tube de mesure entre l'intersection avec le deuxième plan de miroir et la transition entre la section droite et la deuxième section courbée sur le deuxième plan de miroir définissant une hauteur d'arc (h), le double de la distance entre le deuxième plan de miroir et la ligne médiane de tube de mesure à la transition entre la section droite et la deuxième section courbée définissant une largeur d'arc (w), le quotient de la hauteur d'arc (h) divisé par la largeur d'arc (w) définissant une hauteur d'arc relative (hᵣ),
les coupleurs (132a, 132b, 134a, 134b) étant disposés symétriquement par rapport au premier plan de miroir et symétriquement par paires par rapport au deuxième plan de miroir,
l'un des coupleurs (132), qui est le plus proche du deuxième plan de miroir et qui est disposé dans la deuxième section courbée, présentant un plan médian, un angle de distance de coupleur αₖ₁ - mesuré à partir du centre des rayons de courbure de l'axe médian de tube de mesure - étant une mesure de la distance du premier coupleur (132) à partir de la transition entre la section droite (116) et la deuxième section courbée (118),
le débitmètre massique Coriolis ou le densimètre (100) présentant un facteur d'étalonnage de débit (calf) pour le débit massique en fonction d'un comportement de vibration de l'oscillateur,
le débitmètre massique Coriolis ou le densimètre (100) présentant un facteur d'étalonnage de densité pour la densité (crho) en fonction d'au moins une fréquence propre (f1) de l'oscillateur,
**caractérisé en ce que** :
la hauteur relative de l'arc n'est pas inférieure à 0,5, notamment pas inférieure à 0,65,
côté entrée et côté sortie, respectivement au moins deux des coupleurs (132a, 132b, 134a, 134b) d'une paire de tubes de mesure (110a, 110b) reliée par les coupleurs présentent, entre les tubes de mesure (110a, 110b) reliés par le coupleur, une ouverture d'accord entourée par un bord fermé pour influencer les propriétés de vibration de l'oscillateur, les ouvertures d'accord présentant dans le premier plan de miroir une extension d'au moins 70 % du diamètre des tubes de mesure (110a, 110b),
la ligne médiane de tube de mesure dans la deuxième section droite présentant un angle d'au moins 60°, notamment d'au moins 70°, par rapport à un vecteur normal au deuxième plan de miroir,
l'angle de distance de coupleur n'étant pas supérieur à 10°,
le facteur d'étalonnage de densité (crho) présentant une dépendance vis-à-vis de la pression (d crho / d p) pour laquelle |1 / crho* d crho / dp | < 60 ppm/bar, et
le facteur d'étalonnage de débit (calf) présente une dépendance vis-à-vis de la pression (d calf/ d p) pour laquelle | 1lcalf* d calf/ dp | < 70 ppm/bar.

2. Débitmètre Coriolis ou densimètre (100) selon la revendication 1, pour lequel le coupleur (132) qui est le plus proche du deuxième plan de miroir présente un plan médian qui n'est pas distant de plus de la moitié, notamment pas de plus d'un tiers, de préférence pas de plus d'un quart du diamètre extérieur dₐ des tubes de mesure reliés à ce coupleur, par rapport à la transition entre la section droite et la deuxième section courbée à la ligne médiane de tube de mesure.

3. Débitmètre Coriolis ou densimètre (100) selon la revendication 2, pour lequel la première section courbée présente, entre le deuxième plan de miroir et la section droite, au moins trois, notamment au moins quatre corps de renforcement qui entourent le tube de mesure en forme d'anneau.

4. Débitmètre Coriolis ou densimètre (100) selon l'une des revendications précédentes, pour lequel les corps de renforcement présentent une épaisseur dans la direction de la ligne médiane de tube de mesure qui n'est pas supérieure à un quart, notamment pas supérieure à un huitième du diamètre extérieur du tube de mesure.

5. Débitmètre Coriolis ou densimètre (100) selon l'une des revendications précédentes, pour lequel les corps de renforcement présentent, dans la direction radiale, une épaisseur qui s'élève à au moins une, notamment à au moins deux épaisseurs de paroi du tube de mesure.

6. Débitmètre Coriolis ou densimètre (100) selon l'une des revendications précédentes, pour lequel la hauteur d'arc relative (hᵣ) n'est pas supérieure à 1,5, notamment pas supérieure à 1,0.

7. Débitmètre Coriolis ou densimètre (100) selon l'une des revendications précédentes, pour lequel le facteur d'étalonnage de la densité (crho) présente une dépendance vis-à-vis de la pression (d crho / d p) pour laquelle 11 / crho* d crho / dp | < 40 ppm/bar.
